# EUROPÄISCHE PATENTSCHRIFT

(11) **EP 3 073 456 B1**
(45) Veröffentlichungstag und Bekanntmachung des Hinweises auf die Patenterteilung: **03.10.2018**
(21) Anmeldenummer: 16000356.2
(22) Anmeldetag: 12.02.2016
(51) Int. Cl.: G08B 13/196, B60R 25/30, B60R 25/31, B60R 25/102

(54) **VERFAHREN UND VORRICHTUNG ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A COMMERCIAL VEHICLE
PROCÉDÉ ET DISPOSITIF D'ASSISTANCE D'UN CONDUCTEUR DE VÉHICULE AUTOMOBILE, EN PARTICULIER D'UN VÉHICULE UTILITAIRE

(30) Priorität: 03.03.2015 DE 102015002618
(43) Veröffentlichungstag der Anmeldung: 28.09.2016
(73) Patentinhaber: MAN Truck & Bus AG, 80995 München (DE)
(72) Erfinder: Strehlow, Stefan Daniel, 85238 Petershausen (DE); Loos, Michael, 90461 Nürnberg (DE)
(74) Vertreter: Liebl, Thomas

(56) Entgegenhaltungen:
- DE-A1-102004 017 835
- DE-A1-102005 018 487
- DE-A1-102013 001 307
- DE-A1-102013 102 951
- US-A1- 2009 066 488

## Beschreibung

Die Erfindung betrifft ein Verfahren zur Unterstützung eines Fahrers eines Fahrzeugs, insbesondere eines Nutzfahrzeugs, nach dem Oberbegriff des Patentanspruches 1.

Es ist bekannt, bei Fahrzeugen eine Alarmanlage vorzusehen, mittels der ein Diebstahl des Fahrzeugs verhindert werden soll. Zur Erfassung eines Diebstahlversuchs werden dabei üblicherweise eine Vielzahl von Sensoren verwendet, mittels denen ein Einbruch in das Fahrzeug erfasst bzw. erkannt werden kann. Häufig sind sogenannte Türkontaktschalter vorgesehen, mittels denen ein Öffnen einer Fahrzeugtür des Fahrzeugs erfasst wird. Zudem sind regelmäßig auch Infrarot-, Ultraschall- oder Funksensoren vorgesehen, mittels denen ein Innenraum des Fahrzeugs auf Bewegungen überwacht wird. Sofern ein Einbruch bzw. ein Einbruchsversuch mittels der Sensoren erkannt wird, wird üblicherweise ein akustisches und optisches Alarmsignal mittels des Fahrzeugs ausgegeben.

Des Weiteren ist es auch bekannt, dass von Schmugglern Schmuggelware an Fahrzeugen befestigt wird, ohne dass dies ein Fahrer des Fahrzeugs mitbekommt. Die Schmuggelware wird dann von dem Fahrer mittransportiert, ohne dass er dies weiß. Die Schmuggelware wird dabei besonders häufig an Nutzfahrzeugen, insbesondere an Lastwagen, befestigt. Bei einer derartigen Befestigung von Schmuggelware löst eine herkömmliche Alarmanlage eines Fahrzeugs üblicherweise nicht aus, so dass die am Fahrzeug befestigte Schmuggelware unerkannt bleibt und der Fahrer bzw. der Fahrzeugeigentümer mit empfindlichen Strafen rechnen muss.

Die DE 10 2013 001 307 A1 offenbart ein Verfahren zum Betreiben eines Kraftwagens als Bestandteil eines ortsgebundenen Überwachungssystems eines Gebäudes oder Grundstücks, bei dem in Abhängigkeit von einem Anforderungssignal einer kraftwagenexternen Steuereinrichtung eine Umgebung des Kraftwagens mittels zumindest eines Sensors des Kraftwagens überwacht und die zugehörigen Sensordaten an die Steuereinrichtung übermittelt werden. Zudem kann hier ein Meldersignal von zumindest einem kraftwagenexternen Melder des Überwachungssystems empfangen und daraufhin zumindest eine Alarm- und/oder Leuchteinrichtung des Kraftwagens aktiviert werden.

Die weitere DE 10 2013 102 951 A1 betrifft ein Verfahren zur Überwachung eines Fahrzeugs, wobei mittels wenigstens einer Kamera Bilddaten aus wenigstens einem Bereich der Fahrzeugumgebung erfasst werden und eine Aufzeichnung der mittels der wenigstens einen Kamera erfassten Bilddaten erfolgt, wenn ein relevantes Ereignis ermittelt wird, das auf eine Beschädigung, einen Einbruch oder einen Diebstahl hinweist. Dabei erfolgt die Ermittlung des relevanten Ereignisses hier mittels Bildverarbeitung der mittels der wenigstens einen Kamera erfassten Bilddaten.
Aus der US 2009/0066488 A1 geht ein Sicherheitssystem hervor, das Einbruchaktivitäten innerhalb und in der Umgebung eines Fahrzeugs erfasst und Warnsignale zur Beschreibung des Einbruchs durch ein kabelloses Telefonnetzwerk an vorbestimmte Kontakte des Fahrzeugbesitzers übermittelt.
Die weitere DE 10 2005 018 487 A1 offenbart ein Verfahren zum Betreiben einer Überwachungs- und Alarmvorrichtung bei einem parkenden Fahrzeug, bei dem Sensormittel zur Feststellung einer Distanz zwischen dem Fahrzeug und einem sich nähernden Objekt innerhalb einer Aktivzone sowie mit einer Steuereinheit verbundene Reaktionsmittel vorgesehen sind, die bei Annäherung des Objekts aktiviert werden. Dabei wird die Aktivzone hier aufgeteilt, in wenigstens eine erste, äußere Teilzone und in eine zweite, innere Teilzone, wobei eine Aktivierung der Reaktionsmittel in ihrer Menge und/oder Art und/oder Intensität und/oder Reihenfolge in der ersten Teilzone abgestuft gegenüber einer Aktivierung der Reaktionsmittel in ihrer Menge und/oder Art und/oder Intensität und/oder Reihenfolge in der zweiten Teilzone erfolgt. Die DE 10 2005 018 487 A1 offenbart ein Verfahren zur Unterstützung eines Fahrers eines Fahrzeugs gemäß dem Oberbegriff des Anspruchs 1. Die weitere DE 10 2004 017 835 A1 betrifft eine Diebstahlsicherungsvorrichtung, bei der die Erfassungsgenauigkeit, betreffend einen unberechtigten Eindringling in ein Fahrzeug, verbessert werden kann.
Es ist Aufgabe der Erfindung, ein Verfahren zur Unterstützung eines Fahrers eines Fahrzeugs, insbesondere eines Nutzfahrzeugs, bereitzustellen, mittels denen ein Diebstahl des Fahrzeugs und/oder ein Warenschmuggel mit dem Fahrzeug zuverlässig und frühzeitig erkannt und/oder verhindert werden kann.
Die Aufgabe wird durch die Merkmale der unabhängigen Ansprüche gelöst. Bevorzugte Weiterbildungen sind in den Unteransprüchen offenbart.

Gemäß Patentanspruch 1 wird ein Verfahren zur Unterstützung eines Fahrers eines Fahrzeugs, insbesondere eines Nutzfahrzeugs, vorgeschlagen, wobei eine Objekt-Erfassungseinrichtung vorgesehen ist, mittels der außerhalb des Fahrzeugs in einem definierten Nahbereich im Bereich des Fahrzeugs befindliche Objekte, insbesondere Personen und/oder Gegenstände und/oder Fahrzeuge, selbsttätig bzw. automatisch erkannt bzw. erfasst werden. Dabei wird im abgestellten Zustand des Fahrzeugs der Nahbereich mittels der Objekt-Erfassungseinrichtung auf sich in dem Nahbereich befindliche Objekte überwacht. Sofern dann im abgestellten Zustand des Fahrzeugs wenigstens ein Objekt mittels der Objekt-Erfassungseinrichtung erfasst wird, wird mittels wenigstens einer, insbesondere mobilen und/oder stationären und/oder fahrzeugseitigen, Signalausgabeeinrichtung selbsttätig bzw. automatisch wenigstens ein Warnsignal ausgegeben.

Auf diese Weise kann ein Diebstahl des Fahrzeugs besonders zuverlässig und frühzeitig erkannt werden, da das wenigstens eine Warnsignal bereits dann ausgegeben wird, wenn sich die in das Fahrzeug einbrechende Person in dem definierten Nahbereich des Fahrzeugs befindet. Das Warnsignal wird somit beispielsweise nicht erst dann ausgegeben, wenn die einbrechende Person bereits eine Fahrzeugtür des Fahrzeugs öffnet. Zudem kann mit dem erfindungsgemäßen Verfahren auch ein Warenschmuggel mit dem Fahrzeug besonders zuverlässig und frühzeitig erkannt bzw. verhindert werden, da nun wenigstens ein Warnsignal ausgegeben wird, wenn sich beispielsweise ein die Ware am Fahrzeug befestigender Schmuggler oder die am Fahrzeug befestigte Ware in dem definierten Nahbereich außerhalb des Fahrzeugs befindet. Des Weiteren kann mittels des erfindungsgemäßen Verfahrens beispielsweise auch ein Diebstahl von Ladegut oder Treibstoff, eine Fahrerflucht nach Unfällen oder die ungewollte Mitnahme von blinden Passagieren zuverlässig und frühzeitig erkannt bzw. verhindert werden.

Gemäß Patentanspruch 1 können mittels der Objekt-Erfassungseinrichtung von dem Fahrzeug beabstandete Objekte erkannt und/oder erfasst werden. Auf diese Weise kann ein Diebstahl des Fahrzeugs und/oder ein Warenschmuggel mit dem Fahrzeug besonders frühzeitig erkannt bzw. verhindert werden, da mittels der Objekt-Erfassungseinrichtung Objekte erkannt bzw. erfasst werden, die noch nicht in Kontakt mit dem Fahrzeug sind. Zudem ist vorgesehen, dass mittels der Objekt-Erfassungseinrichtung ein Abstand des wenigstens einen von dem Fahrzeug beabstandeten Objekts von dem Fahrzeug ermittelt werden kann, wobei, sofern der ermittelte Abstand geringer als ein definierter Signal-Abstandswert, bevorzugt geringer als etwa 0,1 Meter, ist, mittels der Signalausgabeeinrichtung selbsttätig bzw. automatisch das Warnsignal ausgegeben wird. Auf diese Weise wird das wenigstens eine Warnsignal nur dann ausgegeben, wenn eine hohe Wahrscheinlichkeit eines Diebstahls oder eines Warenschmuggels vorliegt. Bevorzugt ist dabei zudem eine Einstelleinrichtung vorgesehen, mittels der der definierte Signal-Abstandswert einstellbar und/oder verstellbar ist. Die Einstelleinrichtung kann dabei beispielsweise durch den Fahrer des Fahrzeugs und/oder durch den Fahrzeugbesitzer bzw. Fuhrparkmanager betätigbar sein. Alternativ und/oder zusätzlich wäre es beispielsweise aber auch denkbar, dass die Einstelleinrichtung den Signal-Abstandswert in Abhängigkeit von wenigstens einem Parameter, beispielsweise in Abhängigkeit vom aktuellen Fahrzeug-Standort, selbsttätig einstellt bzw. verstellt. So kann beispielsweise auf einem dicht gedrängten Autobahnparkplatz selbsttätig ein anderer Signal-Abstandswert eingestellt werden als auf einem freien Parkplatz eines Gewerbegebiets.

Vorzugsweise wird, sofern der ermittelte Abstand geringer als der Signal-Abstandswert und größer als ein geringer als der Signal-Abstandswert ausgebildeter Alarm-Abstandswert, insbesondere größer als etwa 0,01 Meter, ist, mittels eines Teils der mehreren Signalausgabeeinrichtungen selbsttätig bzw. automatisch das Warnsignal ausgegeben. Sofern der ermittelte Abstand geringer als der Alarm-Abstandswert ist, wird dann mittels allen Signalausgabeeinrichtungen selbsttätig das Warnsignal ausgegeben. So kann beispielsweise bei einer geringeren Wahrscheinlichkeit eines Diebstahls oder eines Warenschmuggels das Warnsignal nur an definierte Personen, beispielsweise an den Fahrer des Fahrzeugs, ausgegeben werden. Bei einer besonders hohen Wahrscheinlichkeit eines Diebstahls oder eines Warenschmuggels kann das Warnsignal dann an alle relevanten Personen, beispielsweise an den Fahrer, die Polizei und den Fahrzeugbesitzer, ausgegeben werden. Bevorzugt kann der Alarm-Abstandswert ebenfalls mittels der genannten Einstelleinrichtung wie gewünscht einstellt bzw. verstellt werden.

Weiter bevorzugt kann mittels der Objekt-Erfassungseinrichtung ein Abstand des wenigstens einen von dem Fahrzeug beabstandeten Objekts von dem Fahrzeug ermittelt werden. Sofern der ermittelte Abstand dann größer als ein definierter Überwachungs-Abstandswert, insbesondere größer als etwa 0,5 Meter, ist, wird der aktuelle Abstand des Objekts mit geringerer Genauigkeit ermittelt als für den Fall, dass der ermittelte Abstand geringer ist als der definierte Überwachungs-Abstandswert. So kann die Objekt-Erfassungseinrichtung besonders energiesparend betrieben werden, da nun bei einer geringeren Wahrscheinlichkeit eines Diebstahls oder eines Warenschmuggels die Energie zum Betreiben der Objekt-Erfassungseinrichtung verringert wird. Die Genauigkeit der Ermittlung des Abstands und die Energie zum Betreiben der Objekt-Erfassungseinrichtung kann dabei beispielsweise durch die Aktivierung und Deaktivierung definierter Sensoren oder durch die Erhöhung und Verringerung der Überwachungsintensität oder der Überwachungsfrequenz eingestellt werden. Bevorzugt ist zudem eine Einstelleinrichtung vorgesehen, mittels der der definierte Überwachungs-Abstandswert einstellbar und/oder verstellbar ist. Diese Einstelleinrichtung kann dabei ebenfalls beispielsweise durch den Fahrer des Fahrzeugs und/oder durch den Fahrzeugbesitzer bzw. Fuhrparkmanager betätigbar sein. Alternativ und/oder zusätzlich wäre es beispielsweise aber auch denkbar, dass die Einstelleinrichtung den Signal-Abstandswert in Abhängigkeit von wenigstens einem Parameter, beispielsweise in Abhängigkeit vom aktuellen Fahrzeug-Standort, selbsttätig einstellt bzw. verstellt. Weiter bevorzugt ist der Überwachungs-Abstandswert größer als der Signal-Abstandswert ausgebildet. Besonders bevorzugt wird weiter, sofern der ermittelte Abstand größer als der Signal-Abstandswert ist, der aktuelle Abstand des Objekts mit geringerer Genauigkeit ermittelt als für den Fall, dass der ermittelte Abstand kleiner als der Signal-Abstandswert ist.

Weiter bevorzugt weist die Objekt-Erfassungseinrichtung wenigstens eine Kontakt-Erfassungseinrichtung auf, mittels ein Kontakt zwischen einem definierten Bereich des Fahrzeugs und dem wenigstens einen Objekt erkannt oder erfasst werden kann. Sofern der definierten Bereich des Fahrzeugs dann in Kontakt mit dem wenigstens einen Objekt ist, wird mittels der Signalausgabeeinrichtung selbsttätig bzw. automatisch das wenigstens eine Warnsignal ausgegeben. Dadurch wird das wenigstens eine Warnsignal erst dann ausgegeben, wenn eine besonders hohe Wahrscheinlichkeit für einen Diebstahl des Fahrzeugs und/oder für einen Warenschmuggel mit dem Fahrzeug vorliegt.

Konkret kann die Objekt-Erfassungseinrichtung beispielsweise durch ein Radarsystem und/oder wenigstens eine Bild-Erfassungseinrichtung, insbesondere durch wenigstens eine optische Kamera und/oder durch eine Wärmebildkamera, und/oder durch einen Infrarotsystem und/oder durch ein Ultraschallsystem, gebildet sein. Mittels derartiger Systeme kann ein sich in dem definierten Nahbereich befindliches Objekt einfach und zuverlässig erfasst werden. Des Weiteren kann die Objekt-Erfassungseinrichtung beispielsweise auch durch thermische Sensoren (beispielsweise bei einem als Kühltransporter ausgebildeten Fahrzeug), durch elektrische, insbesondere induktive, Sensoren, durch magnetische Sensoren, durch pneumatische Sensoren, durch hydraulische Sensoren oder durch mechanische Sensoren gebildet sein. Ein mechanischer Sensor kann dabei beispielsweise durch einen Türöffner des Fahrzeugs gebildet sein. Bevorzugt ist es zudem, wenn bei der Objekt-Erfassungseinrichtung wenigstens eine offene bzw. standardisierte Schnittstelle vorgesehen ist, um auf einfache Weise weitere, insbesondere zukünftige oder externe, Systeme zur Objekterfassung verwenden zu können. Ein externes System kann dabei beispielsweise dem Aufbau eines als Nutzfahrzeug ausgebildeten Fahrzeugs oder dem Anhänger/Auflieger eines als Nutzfahrzeug-Gespann ausgebildeten Fahrzeugs zugeordnet sein. Beispielsweise kann das externe System durch eine Drohne gebildet sein.

Bevorzugt wird die Objekt-Erfassungseinrichtung zumindest teilweise durch ein weiteres Fahrzeugsystem, insbesondere durch ein Einparkhilfe-System des Fahrzeugs und/oder durch einen Abstandhalte-System des Fahrzeugs, genutzt, um eine Objekt-Erfassungseinrichtung des Fahrzeugs mehrfach zu nutzen und somit das Fahrzeug besonders kostengünstig auszubilden. Das weitere Fahrzeugsystem kann beispielsweise auch als Toter-Winkel-Assistent und/oder als Spurhalteassistent und/oder als Notbremsassistent und/oder als ein anderes Fahrassistenzsystem des Fahrzeugs ausgebildet sein. Alternativ und/oder zusätzlich kann die Objekt-Erfassungseinrichtung aber auch zumindest teilweise durch ein separates bzw. zusätzliches System gebildet sein, wodurch die Objekt-Erfassungseinrichtung lediglich für das erfindungsgemäße Verfahren verwendet wird. Dies hat den Vorteil, dass die Objekt-Erfassungseinrichtung auf einfache Weise auf die Durchführung des erfindungsgemäßen Verfahrens optimiert werden kann.

Erfindungsgemäß ist die Objekt-Erfassungseinrichtung in der Umgebung des abgestellten Fahrzeugs angeordnet sein. Auf diese Weise kann der Nahbereich des Fahrzeugs besonders einfach auf sich darin befindliche Objekte überwacht werden. Zudem kann mittels einer in der Umgebung des abgestellten Fahrzeugs angeordneten Objekt-Erfassungseinrichtung auch auf einfache Weise ein großer Bereich des Fahrzeugs auf sich in dem definierten Nahbereich befindliche Objekte überwacht werden. Zusätzlich kann die Objekt-Erfassungseinrichtung auch zumindest teilweise dem Fahrzeug zugeordnet sein, um den Diebstahl des Fahrzeugs und/oder den Warenschmuggel mit dem Fahrzeug ortsunabhängig bzw. unabhängig von der Position des abgestellten Fahrzeugs erkennen zu können. Zusätzlich kann die Objekt-Erfassungseinrichtung auch zumindest teilweise stationär und/oder ortsfest angeordnet sein. Dadurch kann das Fahrzeug auf besonders kostengünstige Weise auf sich in dem definierten Nahbereich befindliche Objekte überwacht werden, wenn es in einer definierten Position bzw. an einem definierten Ort abgestellt ist, an dem das Fahrzeug mit der stationären und/oder ortsfesten Objekt-Erfassungseinrichtung erfassbar ist. Ein derartiger Ort kann beispielsweise ein Ort sein, an dem Diebstähle von Fahrzeugen oder Warenschmuggel mit Fahrzeugen besonders häufig vorkommen. Die stationär und/oder ortsfest angeordnete Objekt-Erfassungseinrichtung kann dabei beispielsweise durch eine stationäre bzw. ortsfeste Webcam gebildet sein.

Weiter bevorzugt wird mittels der Objekt-Erfassungseinrichtung der definierte Nahbereich in einem definierten Zeitintervall auf sich in dem Nahbereich befindliche Objekte überprüft, um den Nahbereich auf energiesparende Weise überprüfen zu können und somit, insbesondere bei einer dem Fahrzeug zugeordneten Objekt-Erfassungseinrichtung, eine Überprüfung des Nahbereichs auch für einen längeren Zeitraum zu ermöglichen. Bevorzugt ist dabei vorgesehen, dass das definierte Zeitintervall in Abhängigkeit von dem Abstand zwischen dem wenigstens einen Objekts und dem Fahrzeug und/oder in Abhängigkeit vom aktuellen Standort des Fahrzeugs selbsttätig eingestellt und/oder verstellt wird. Alternativ und/oder zusätzlich könnte aber auch eine betätigbare Einstelleinrichtung vorgesehen sein, mittels der das definierte Zeitintervall wie gewünscht eingestellt und/oder verstellt werden kann. Die Einstelleinrichtung kann dabei beispielsweise durch den Fahrer des Fahrzeugs und/oder durch den Fahrzeugbesitzer bzw. den Fuhrparkmanager betätigbar sein.

Besonders bevorzugt wird dabei, sofern mittels der Objekt-Erfassungseinrichtung kein Objekt in dem Nahbereich erfasst wird, der Nahbereich in einem ersten Zeitintervall, insbesondere in etwa alle 10 Sekunden, überprüft. Sofern mittels der Objekt-Erfassungseinrichtung wenigstens ein Objekt in dem Nahbereich erfasst wird, wird der Nahbereich dann in einem kürzer als erste Zeitintervall ausgebildeten zweiten Zeitintervall, insbesondere in etwa alle 0,5 Sekunden, überprüft. So kann beispielsweise auf energiesparende Weise mit hoher Genauigkeit ermittelt werden, wie lange sich das Objekt in dem Nahbereich befindet oder wo sich das Objekt aktuell in dem Nahbereich befindet.

Vorzugsweise weist die Objekt-Erfassungseinrichtung eine Zeitdauer-Ermittlungseinrichtung auf, mittels eine Zeitdauer ermittelbar ist, in der sich das mittels der Objekt-Erfassungseinrichtung erfasst Objekt in dem definierten Nahbereich befindet. Bevorzugt ist dabei vorgesehen, dass, sofern die ermittelte Zeitdauer einen definierten Zeitdauer-Wert, insbesondere in etwa 30 Sekunden, überschreitet, mittels der Signalausgabeeinrichtung selbsttätig bzw. automatisch das Warnsignal ausgegeben wird. Auf diese Weise wird das Warnsignal lediglich dann ausgegeben, wenn sich das Objekt für eine längere Zeitdauer in dem definierten Nahbereich befindet und somit eine besonders hohe Wahrscheinlichkeit eines Diebstahls des Fahrzeugs und/oder eines Warenschmuggels mit dem Fahrzeug vorliegt.

Weiter bevorzugt kann mittels der Objekt-Erfassungseinrichtung eine Position des Objekts relativ zu dem Fahrzeug ermittelt werden. Mittels der Zeitdauer-Ermittlungseinrichtung kann dann eine Positions-Zeitdauer ermittelt werden, in der sich das mittels der Objekt-Erfassungseinrichtung erfasste Objekt in einer definierten Position relativ zu dem Fahrzeug befindet. Sofern die ermittelte Positions-Zeitdauer einen definierten Zeitdauer-Wert, insbesondere in etwa 10 Sekunden, überschreitet, wird mittels der Signalausgabeeinrichtung selbsttätig bzw. automatisch das wenigstens eine Warnsignal ausgegeben. Dadurch wird das Warnsignal ebenfalls lediglich dann ausgegeben, wenn eine besonders Wahrscheinlichkeit eines Diebstahls des Fahrzeugs und/oder eines Warenschmuggels mit dem Fahrzeug vorliegt.

Vorzugsweise ist wenigstens Betätigungseinrichtung, insbesondere ein Taster und/oder ein Schalter, vorgesehen, mittels der die Objekt-Erfassungseinrichtung und/oder die wenigstens eine Signalausgabeeinrichtung deaktiviert und/oder aktiviert werden kann. Auf diese Weise können die Objekt-Erfassungseinrichtung und/oder die wenigstens eine Signalausgabeeinrichtung deaktiviert oder aktiviert werden, wenn dies gewünscht bzw. erforderlich ist. Eine Deaktivierung der Objekt-Erfassungseinrichtung kann dabei beispielsweise bei einem Be- und/oder Entladevorgang des Fahrzeugs durch den Fahrer gewünscht sein, um eine unnötige Ausgabe des Warnsignals mittels der Signalausgabeeinrichtung zu vermeiden. Eine Aktivierung wenigstens einer fahrzeugseitigen Signalausgabeeinrichtung mittels der Betätigungseinrichtung kann beispielsweise erforderlich sein, wenn mittels der Objekt-Erfassungseinrichtung ein definierter Objekttyp, beispielsweise ein Tier, erfasst wird. Bevorzugt ist die Betätigungseinrichtung zudem der wenigstens einen Signalausgabeeinrichtung zugeordnet, um die Objekt-Erfassungseinrichtung und/oder die wenigstens eine Signalausgabeeinrichtung auf einfache und zuverlässige Weise in Abhängigkeit von der Ausgabe eines Warnsignals mittels der Signalausgabeeinrichtung betätigen zu können.

Bevorzugt ist zudem eine Blockiereinrichtung vorgesehen, mittels der eine Deaktivierung der Objekt-Erfassungseinrichtung und/oder der wenigstens einen Signalausgabeeinrichtung blockiert bzw. gesperrt werden kann. Auf diese Weise kann beispielsweise verhindert werden, dass der Fahrer des Fahrzeugs die Objekt-Erfassungseinrichtung und/oder die wenigstens eine Signalausgabeeinrichtung deaktiviert und anschließend einen Teil des Kraftstoffs des Fahrzeugs stiehlt. Die Blockierung der Objekt-Erfassungseinrichtung und/oder der wenigstens einen Signalausgabeeinrichtung kann dabei beispielsweise mittels einer Betätigungseinrichtung, insbesondere eines Taster und/oder eines Schalters, aktiviert und deaktiviert werden. Alternativ und/oder zusätzlich wäre es beispielsweise aber auch denkbar, dass die Blockierung der wenigstens einen Signalausgabeeinrichtung in Abhängigkeit von wenigstens einem Parameter, insbesondere in Abhängigkeit von der Position des Fahrers relativ zu dem Fahrzeug, selbsttätig aktiviert und deaktiviert wird.

Alternativ und/oder zusätzlich zu der Betätigungseinrichtung kann auch eine Regel- und/oder Steuereinrichtung vorgesehen sein, mittels der die Objekt-Erfassungseinrichtung beim Abstellen des Fahrzeugs selbsttätig aktiviert und/oder beim Starten des Fahrzeugs selbsttätig deaktiviert wird. So wird zuverlässig sichergestellt, dass die Objekt-Erfassungseinrichtung im abgestellten Zustand des Fahrzeugs aktiviert ist.

Weiter bevorzugt ist das wenigstens eine Warnsignal durch ein akustisches und/oder durch ein optisches und/oder durch ein haptisches Signal gebildet.

Bevorzugt ist die wenigstens eine Signalausgabeeinrichtung durch eine mobile Signalausgebeeinrichtung, insbesondere durch ein Smartphone und/oder einen Tablet-PC und/oder durch eine Smartwatch, gebildet. Auf diese Weise kann das Warnsignal zuverlässig und ortsunabhängig an eine die mobile Signalausgebeeinrichtung mitführende Person, beispielsweise den Fahrer des Fahrzeugs, ausgegeben werden. Durch die Ausbildung als herkömmliches Smartphone und/oder als herkömmlicher Tablet-PC kann die mobile Signalausgabeeinrichtung zudem auch besonders kostengünstig realisiert werden. Die Ausbildung des Smartphones und/oder des Tablet-PC als mobile Signalausgabeeinrichtung kann dabei beispielsweise mittels einer mobilen App bzw. einer mobilen Anwendungssoftware erfolgen. Das Warnsignal kann dann beispielsweise als SMS/MMS, als Vibrationssignal oder als E-Mail ausgebildet sein. Bevorzugt werden mittels der mobilen Signalausgebeeinrichtung zusammen mit dem Warnsignal auch noch mittels der Objekt-Erfassungseinrichtung erfasste Informationen über das erfasste Objekt, beispielsweise die Art des Objekts, an die, die mobile Signalausgebeeinrichtung mitführende Person ausgegeben. In Abhängigkeit von diesen Informationen kann die Person dann geeignete Maßnahmen einleiten. Sofern aus den Informationen beispielsweise eine hohe Wahrscheinlichkeit eines Warenschmuggels oder eines Diebstahl hervorgeht, kann die Person beispielsweise einen Notruf an die Polizei absetzen. Geht aus den Informationen beispielsweise eine definierte Beschädigung des Fahrzeugs, beispielsweise durch ein anderes Fahrzeug, hervor, kann die Person beispielsweise den Pannendienst anrufen.

Alternativ und/oder zusätzlich kann die wenigstens eine Signalausgabeeinrichtung auch durch eine stationäre Signalausgabeeinrichtung, insbesondere durch einen stationären PC, gebildet sein. Dadurch kann das Warnsignal beispielsweise an den Eigentümer des Fahrzeugs bzw. an den das Fahrzeug besitzenden Betrieb oder an die Polizei ausgegeben werden. Das Warnsignal kann dann beispielsweise als SMS/MMS oder als E-Mail ausgebildet sein. Bevorzugt werden mittels der stationären Signalausgabeeinrichtung zusammen mit dem Warnsignal ebenfalls auch mittels der Objekt-Erfassungseinrichtung erfasste Informationen über das erfasste Objekt ausgegeben. Eine im Bereich der stationären Signalausgabeeinrichtung befindliche Person kann dann ebenfalls in Abhängigkeit von diesen Informationen geeignete Maßnahmen einleiten.

Die signaltechnische Verbindung der wenigstens einen mobilen und/oder der wenigstens einen stationären Signalausgebeeinrichtung mit der Objekt-Erfassungseinrichtung kann dabei beispielsweise durch eine Internetverbindung, eine W-LAN-Verbindung, eine Funkverbindung (aktiv, passiv, Mobilfunk), eine Bluetooth-Verbindung und/oder eine NFC-Verbindung realisiert werden.

Weiter alternativ und/oder zusätzlich kann die wenigstens eine Signalausgabeeinrichtung auch durch eine fahrzeugseitige Signalausgabeeinrichtung gebildet sein, um den Diebstahl oder den Warenschmuggel verhindern zu können oder Passanten auf das Fahrzeug aufmerksam zu machen.

Bevorzugt ist die wenigstens eine fahrzeugseitige Signalausgabeeinrichtung durch eine bereits vorhandene Signalausgabeeinrichtung des Fahrzeugs gebildet, um die fahrzeugseitige Signalausgabeeinrichtung besonders kostengünstig auszuführen. Die wenigstens eine bereits vorhandene Signalausgabeeinrichtung kann dabei beispielsweise durch eine Fahrzeughupe und/oder durch wenigstens einen Fahrtrichtungsanzeiger des Fahrzeugs und/oder durch eine Außenbeleuchtung, insbesondere durch wenigstens eine Bremsleuchte, des Fahrzeugs gebildet sein.

Alternativ und/oder zusätzlich kann die wenigstens eine fahrzeugseitige Signalausgabeeinrichtung auch durch eine zusätzliche, nicht bereits am Fahrzeug vorhandene Signalausgabeeinrichtung gebildet sein. Diese zusätzliche Signalausgabeeinrichtung ist vorzugsweise durch wenigstens einen zusätzlichen Lautsprecher und/oder durch wenigstens ein zusätzliches Beleuchtungselement gebildet. Konkret kann das zusätzliche Beleuchtungselement beispielsweise als LED-Element am Rahmen des als Lastkraftwagen ausgebildeten Fahrzeugs ausgebildet sein. Bevorzugt kann die zusätzliche Signalausgabeeinrichtung zudem frei programmierbar sein, so dass das Warnsignal wie gewünscht eingestellt werden kann.

Weiter bevorzugt kann mittels der Objekt-Erfassungseinrichtung die Art bzw. der Typ und/oder die Größe des erfassten Objekts ermittelt bzw. abgeschätzt werden. Auf diese Weise kann mittels der Objekt-Erfassungseinrichtung beispielsweise ermittelt werden, ob es sich bei dem Objekt um ein Fahrzeug, um ein Tier oder um einen Menschen handelt. Die Art bzw. der Typ des Objekts kann dabei beispielsweise über die Größe des erfassten Objekts und Position des erfassten Objekts relativ zu dem Fahrzeug oder über Mustererkennung ermittelt werden. Bevorzugt ist es dabei zudem, wenn das Warnsignal der wenigstens einen Signalausgabeeinrichtung in Abhängigkeit von der Art des Objekts ausgegeben wird oder nicht. Handelt es sich bei dem erfassten Objekt um ein Tier, kann beispielsweise nur mit den fahrzeugseitigen Signalausgabeeinrichtungen das Warnsignal ausgegeben werden. Handelt es sich bei dem erfassten Objekt um einen Menschen, kann beispielsweise mit allen Signalausgabeeinrichtungen das Warnsignal ausgegeben werden.

Weiter bevorzugt ist zudem wenigstens eine signalübertragend mit der Objekt-Erfassungseinrichtung verbundene, insbesondere fahrzeugseitige und/oder externe, Speichereinrichtung vorgesehen, in der wenigstens eine, vorzugsweise alle, mittels der Objekt-Erfassungseinrichtung erfasste Objektinformation gespeichert wird. Auf diese Weise können die erfassten Objektinformationen, beispielsweise der Abstand des erfassten Objekts zum Fahrzeug, für eine detaillierte Aufarbeitung einer Situation, in der ein Objekt mittels der Objekt-Erfassungseinrichtung erfasst wurde, verwendet werden. Bevorzugt ist dabei vorgesehen, dass die Speichereinrichtung signaltechnisch mit einer Auswerteeinheit verbunden ist, mittels der die mittels der Objekt-Erfassungseinrichtung erfassten Objektinformationen ausgewertet werden. In Abhängigkeit von dieser Auswertung werden die erfassten Objektinformationen dann in der Speichereinrichtung abgespeichert oder nicht. Sofern mittels der Auswerteeinheit ermittelt wird, dass eine hohe Wahrscheinlichkeit eines Warenschmuggels oder eines Fahrzeug-Diebstahls vorliegt, können die erfassten Objektinformationen beispielsweise in der Speichereinrichtung abgespeichert werden. Wird ermittelt, dass nur eine geringe Wahrscheinlichkeit eines Warenschmuggels oder eines Fahrzeug-Diebstahls vorliegt, kann beispielsweise auf ein Abspeichern der Objektinformationen verzichtet werden. Im Falle des Speicherns der Daten in einer fahrzeugseitigen Speichereinrichtung ist es bevorzugt, dass die gespeicherten Daten auch in einer externen Speichereinrichtung gespeichert werden, um die Daten beispielsweise auch bei Manipulation der fahrzeugseitigen Speichereinrichtung nach erfolgtem Diebstahl zugänglich zu haben. Diese externe Speichereinrichtung kann dabei durch unterschiedliche Geräten und Medien gebildet sein (zum Beispiel Speicher einer Cloud oder eines zentralen Servers, eines mobilen Endgerätes, eines benachbarten Fahrzeugs, etc.).

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: eine schematische Darstellung, anhand der das erfindungsgemäße Verfahren erläutert wird;
- Fig. 2: ein Diagramm, anhand dem der Aufbau einer Vorrichtung zur Durchführung des Verfahrens erläutert wird;
- Fig. 3: ein Diagramm, anhand dem der Ablauf des erfindungsgemäßen Verfahrens erläutert wird; und
- Fig. 4: eine schematische Darstellung, anhand der das erfindungsgemäße Verfahren erläutert wird.

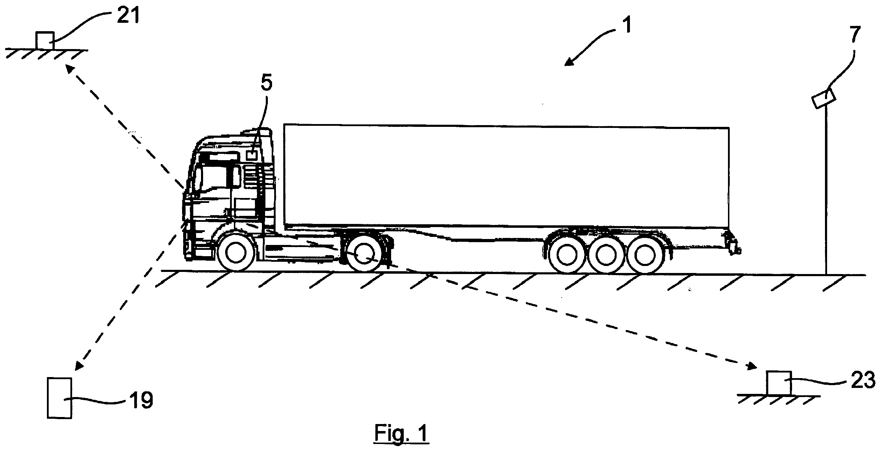

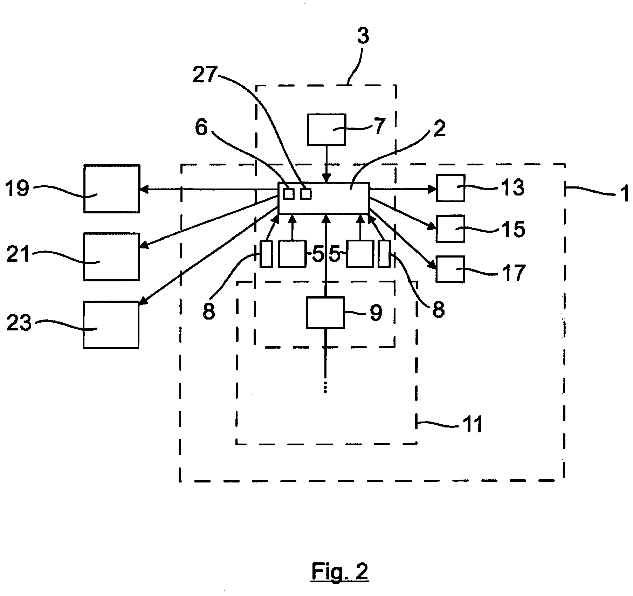

In Fig. 1 ist ein hier beispielhaft als Lastkraftwagen 1 ausgebildetes Fahrzeug gezeigt. Der Lastkraftwagen ist hier in einer definierten Position an einem Parkplatz abgestellt. Ein Fahrer des Lastkraftwagens 1 befindet sich dabei außerhalb des Lastkraftwagens 1 und hat keinen Blickkontakt zu dem Lastkraftwagen 1. Gemäß Fig. 1 weist der Lastkraftwagen 1 eine mit gestrichelten Linien angedeutete Regel- und/oder Steuereinrichtung 2 (Fig. 2) auf. Die Regel- und/oder Steuereinrichtung 2 ist Bestandteil einer Objekt-Erfassungseinrichtung 3 (Fig. 2), mittels der außerhalb Lastkraftwagen 1 im definierten Nahbereich des Bereich des Lastkraftwagens 1 befindliche Objekte, beispielsweise Personen, Gegenstände und Fahrzeuge, selbsttätig bzw. automatisch erkannt und/oder erfasst werden.

Zum Erkennen bzw. zum Erfassen der in dem definierten Nahbereich befindlichen Objekte weist die Objekt-Erfassungseinrichtung 3 hier beispielhaft mehrere dem Lastkraftwagen 1 zugeordnete, hier beispielhaft als Kameras 5 ausgebildete Bild-Erfassungseinrichtungen auf, mittels denen ein Teil des definierten Nahbereichs des Lastkraftwagens 1 filmisch und/oder bildlich erfasst werden kann. Mittels einer Bild-Verarbeitungseinrichtung 6 (Fig. 2) der Regel- und/oder Steuereinrichtung 2 kann dann aus den Aufnahmen der Kameras 5 ermittelt werden, ob sich in dem mittels der Kameras 5 erfassbaren Nahbereich des Lastkraftwagens 1 Objekte befinden oder nicht. In Fig. 1 ist nur eine der mehreren Kameras 5 ersichtlich.

Des Weiteren weist die Objekt-Erfassungseinrichtung 3 hier beispielhaft auch eine in der unmittelbaren Umgebung des abgestellten Lastkraftwagens 1 stationär bzw. ortsfest angeordnete, hier beispielhaft ebenfalls als Kamera 7 ausgebildete Bild-Erfassungseinrichtung auf, mittels der ein Teil des definierten Nahbereichs des Lastkraftwagens 1 bildlich erfasst wird. Die Kamera 7 ist signaltechnisch mit der Bild-Verarbeitungseinrichtung 6 verbunden, so dass mittels der Bild-Verarbeitungseinrichtung 6 aus den Aufnahmen der Kamera 7 ermittelt werden kann, ob sich in dem mittels der Kamera 7 erfassbaren Nahbereich des Lastkraftwagens 1 Objekte befinden oder nicht.

Wie in Fig. 2 weiter gezeigt ist, weist die Objekt-Erfassungseinrichtung 3 hier beispielhaft auch ein, dem Lastkraftwagen 1 zugeordnetes Ultraschallsystem 9 auf, mittels dem ebenfalls Objekte in dem definierten Nahbereich des Lastkraftwagens 1 erfasst und/oder erkannt werden können. Das Ultraschallsystem 9 ist hier ebenfalls signaltechnisch mit der Regel- und/oder Steuereinrichtung 2 verbunden und wird hier beispielhaft auch von einem Einparkhilfe-System 11 des Lastkraftwagens 1 genutzt.

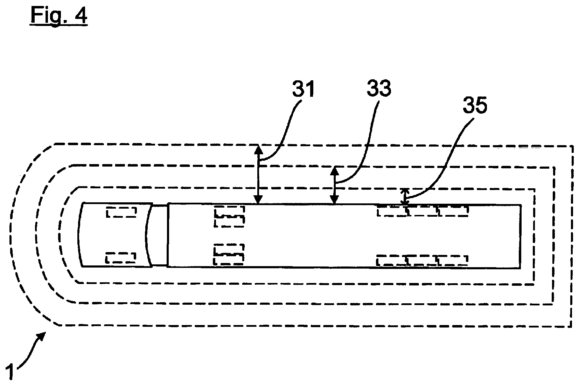

Mittels der Kameras 5, 7 und dem Ultraschallsystem 9 können hier beispielhaft von dem Fahrzeug (1) beabstandete Objekte erkannt bzw. erfasst werden. Mittels der Objekt-Erfassungseinrichtung 3 kann hier zudem ein Abstand des wenigstens einen mittels der Kameras 5, 7 oder des Ultraschallsystems 9 erfassten, von dem Fahrzeug (1) beabstandeten Objekts von dem Fahrzeug (1) ermittelt werden. Sofern der ermittelte Abstand größer als ein definierter Überwachungs-Abstandswert 31 (Fig. 4), hier beispielhaft etwa 0,5 Meter, ist, wird der aktuelle Abstand des Objekts hier beispielhaft dann mit geringerer Genauigkeit ermittelt als für den Fall, dass der ermittelte Abstand kleiner ist als der definierte Überwachungs-Abstandswert.

Des Weiteren weist die Objekt-Erfassungseinrichtung 3 hier beispielhaft auch zwei Kontakt-Erfassungseinrichtungen 8 auf, von denen jede hier jeweils einem Türgriff des Lastkraftwagens 1 zugeordnet ist. Auf diese Weise wird mittels der Kontakt-Erfassungseinrichtungen 8 der Kontakt eines Objekts, insbesondere einer Person, mit einem Türgriff zuverlässig erkannt bzw. erfasst wird. Die Kontakt-Erfassungseinrichtungen 25 sind hier ebenfalls signaltechnisch mit der Regel- und/oder Steuereinrichtung 2 verbunden.

Wie aus Fig. 2 hervorgeht, ist die Regel- und/oder Steuereinrichtung 2 auch signaltechnisch mit mehreren, dem Lastkraftwagen 1 zugeordneten Signalausgabeeinrichtung 13, 15, 17 verbunden. Die fahrzeugseitige Signalausgabeeinrichtung 13 ist hier beispielhaft durch eine Hupe des Lastkraftwagens 1 gebildet, während die fahrzeugseitige Signalausgabeeinrichtung 15 hier beispielhaft durch eine Warnblinkanlage des Lastkraftwagens 1 gebildet ist. Die Signalausgabeeinrichtung 17 des Lastkraftwagens 1 ist hier beispielhaft durch einen zusätzlichen Lautsprecher des Lastkraftwagens 1 gebildet, der speziell zur Durchführung des erfindungsgemäßen Verfahrens an den Lastkraftwagen 1 montiert wurde.

Gemäß Fig. 1 ist die Regel- und/oder Steuereinrichtung 2 hier beispielhaft auch signaltechnisch mit einer hier beispielhaft als Smartphone 19 ausgebildeten mobilen Signalausgabeeinrichtung verbunden. Das Smartphone 19 wird hier beispielhaft durch den Fahrer des Lastkraftwagens 1 mitgeführt. Zudem ist die Regel- und/oder Steuereinrichtung 2 auch mit mehreren, hier beispielhaft zwei, stationären Signalausgabeeinrichtungen 21, 23 signaltechnisch verbunden. Die stationären Signalausgabeeinrichtungen 21, 23 können beispielsweise als stationäre PCs ausgebildet sein. Die stationäre Signalausgabeeinrichtung 21 befindet sich hier beispielhaft in einer Überwachungszentrale des Besitzers des Lastkraftwagens 1, während sich die Signalausgabeeinrichtung 23 in einer Polizeistation befindet. Die signaltechnische Verbindungen zwischen der Regel- und/oder Steuereinrichtung 2 und dem Smartphone 19, zwischen der Regel- und/oder Steuereinrichtung 2 und der Signalausgabeeinrichtung 21 und zwischen der Regel- und/oder Steuereinrichtung 2 und der Signalausgabeeinrichtung 23 wird hier beispielhaft über das Internet realisiert. Dies kann beispielsweise über proprietäre/offene Web-Portale/IT-Systeme erfolgen.

Des Weiteren weist die Objekt-Erfassungseinrichtung 3 auch eine Zeitdauer-Ermittlungseinrichtung 27 (Fig. 2) auf, mittels der eine Zeitdauer ermittelbar ist, in der sich das mittels der Objekt-Erfassungseinrichtung 3 erfasste Objekt in dem definierten Nahbereich befindet.

Mittels der Signalausgabeeinrichtungen 13 bis 23 werden hier beispielhaft dann Warnsignale ausgegeben, wenn mittels der Kameras 5, 7 und des Ultraschallsystems 9 wenigstens ein Objekt in dem definierten Nahbereich des Lastkraftwagens 1 erkannt bzw. erfasst wird, die mittels der Zeitdauer-Ermittlungseinrichtung 27 ermittelte Zeitdauer, in der sich das erfasste Objekt in dem Nahbereich befindet, größer ist als ein definierter Zeitdauer-Wert, hier in etwa 30 Sekunden, und der ermittelte Abstand zwischen dem Objekt und dem Lastkraftwagen geringer als ein definierter Signal-Abstandswert 33 (Fig. 4), hier beispielhaft etwa 0,1 Meter, ist. Sofern der ermittelte Abstand geringer als der Signal-Abstandswert und größer als ein Alarm-Abstandswert 35 (Fig. 4), hier beispielhaft etwa 0,01 Meter, ist, kann dabei nur allein mittels des Smartphones 19 ein Warnsignal ausgegeben werden. Sofern der ermittelte Abstand geringer ist als der Alarm-Abstandswert 35, kann mittels allen Signalausgabeeinrichtungen 13 bis 23 das Warnsignal ausgegeben werden. Zudem werden mittels der Signalausgabeeinrichtungen 13 bis 23 hier beispielhaft auch dann Warnsignale ausgegeben, wenn mittels der Kontakt-Erfassungseinrichtungen 8 ein Kontakt eines Objekts mit einem Türgriff des Lastkraftwagens 1 erfasst wird. Auf diese Weise kann ein Diebstahl des Lastkraftwagens 1 und/oder ein Warenschmuggel mit dem Lastkraftwagen 1 zuverlässig und frühzeitig erfasst bzw. verhindert werden.

Des Weiteren ist hier beispielhaft dem Smartphone 19 und jeder stationären Signalausgabeeinrichtung 21, 23 jeweils auch eine Betätigungseinrichtung 37 (Fig. 2), beispielsweise ein Taster und/oder ein Schalter, zugeordnet, mittels der hier beispielhaft die Objekt-Erfassungseinrichtung und die Ausgabe der Warnsignale mittels der Signalausgabeeinrichtungen 13 bis 23 in Teilen oder gänzlich deaktiviert und aktiviert werden kann.

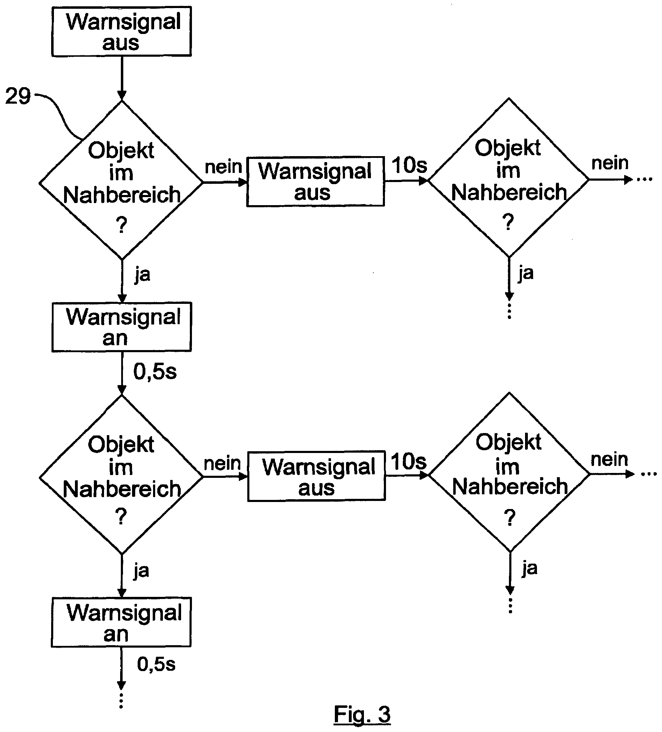

Weiter wird mittels der Objekt-Erfassungseinrichtung 3 der definierte Nahbereich beispielhaft in einem definierten Zeitintervall auf sich in dem Nahbereich befindliche Objekte überprüft. Das definierte Zeitintervall wird hier dabei in Abhängigkeit von dem Abstand wenigstens eines Objekts zu dem Lastkraftwagen 1 definiert eingestellt bzw. verstellt. Diese Einstellung bzw. Verstellung des definierten Zeitintervalls in Abhängigkeit von dem Abstand zwischen dem wenigstens einen Objekt und dem Lastkraftwagen 1 wird nachfolgend anhand von Fig. 3 näher erläutert:
In einem Ausgangszustand befindet sich kein Objekt in dem definierten Nahbereich des Lastkraftwagens 1. Mittels der Signalausgabeeinrichtungen 13 bis 23 werden daher keine Warnsignale ausgegeben. Sofern dann bei einer ersten Überprüfung 29 des Nahbereichs auf sich in dem Nahbereich befindliche Objekte festgestellt wird, dass sich immer noch kein Objekt in dem Nahbereich befindet, bleibt das Warnsignal ausgeschaltet. Nach einem Zeitintervall von 10 Sekunden wird dann eine weitere Überprüfung des Nahbereichs durchgeführt. Sofern sich jedoch bei der ersten Überprüfung 29 wenigstens ein Objekt in dem Nahbereich befindet, werden die Signalausgabeeinrichtungen 13 bis 23 aktiviert. Nach einem Zeitintervall von 0,5 Sekunden wird dann eine weitere Überprüfung des Nahbereichs durchgeführt.

### Bezugszeichenliste

- 1: Lastkraftwagen
- 2: Regel- und/oder Steuereinrichtung
- 3: Objekt-Erfassungseinrichtung
- 5: Kamera
- 7: Kamera
- 8: Kontakt-Erfassungseinrichtung
- 9: Ultraschallsystem
- 11: Einparkhilfe-System
- 13: Hupe
- 15: Warnblinkanlage
- 17: zusätzlicher Lautsprecher
- 19: Smartphone
- 21: stationäre Signalausgabeeinrichtung
- 23: stationäre Signalausgabeeinrichtung
- 27: Zeitdauer-Ermittlungseinrichtung
- 29: erste Überprüfung
- 31: Überwachungs-Abstandswert
- 33: Signal- Abstandswert
- 35: Alarm- Abstandswert
- 37: Betätigungseinrichtung

## Patentansprüche

1. Verfahren zur Unterstützung eines Fahrers eines Fahrzeugs, wobei eine Objekt-Erfassungseinrichtung (3) vorgesehen ist, mittels der außerhalb des Fahrzeugs (1) in einem definierten Nahbereich im Bereich des Fahrzeugs (1) befindliche Objekte selbsttätig erkennbar und/oder erfassbar sind,
wobei im abgestellten Zustand des Fahrzeugs (1) der Nahbereich mittels der Objekt-Erfassungseinrichtung (3) auf sich in dem Nahbereich befindliche Objekte überwacht wird,
wobei mittels der Objekt-Erfassungseinrichtung (3) von dem Fahrzeug (1) beabstandete Objekte erkennbar und/oder erfassbar sind,
wobei mittels der Objekt-Erfassungseinrichtung (3) ein Abstand des wenigstens einen von dem Fahrzeug (1) beabstandeten Objekts von dem Fahrzeug (1) ermittelbar ist,
wobei, sofern im abgestellten Zustand des Fahrzeugs (1) wenigstens ein Objekt mittels der Objekt-Erfassungseinrichtung (3) erfasst wird und der ermittelte Abstand geringer als ein definierter Signal-Abstandswert (33) ist, mittels wenigstens einer Signalausgabeeinrichtung selbsttätig wenigstens ein Warnsignal ausgegeben wird, **dadurch gekennzeichnet,**
**dass** die Objekt-Erfassungseinrichtung in der Umgebung des abgestellten Fahrzeugs (1) angeordnet ist.

2. Verfahren nach Anspruch 1, **dadurch gekennzeichnet, dass**, sofern der ermittelte Abstand geringer als der Signal-Abstandswert und größer als ein geringer als der Signal-Abstandswert ausgebildeter Alarm-Abstandswert (35), insbesondere größer als etwa 0,01 Meter, ist, mittels eines Teils der mehreren Signalausgabeeinrichtungen selbsttätig das Warnsignal ausgegeben wird, und dass, sofern der ermittelte Abstand geringer als der Alarm-Abstandswert (35) ist, mittels allen Signalausgabeeinrichtungen selbsttätig das Warnsignal ausgegeben wird.

3. Verfahren nach Anspruch 1 oder 2, **dadurch gekennzeichnet, dass** mittels der Objekt-Erfassungseinrichtung (3) ein Abstand des wenigstens einen von dem Fahrzeug (1) beabstandeten Objekts von dem Fahrzeug (1) ermittelbar ist, dass, sofern der ermittelte Abstand größer als ein definierter Überwachungs-Abstandswert (31), insbesondere größer als etwa 0,5 Meter, ist, der aktuelle Abstand des Objekts mit geringerer Genauigkeit ermittelt wird als für den Fall, dass der ermittelte Abstand nicht größer ist als der definierte Überwachungs-Abstandswert (31).

4. Verfahren nach einem der vorhergehenden Ansprüche, **dadurch gekennzeichnet, dass** die Objekt-Erfassungseinrichtung zumindest teilweise durch ein weiteres Fahrzeugsystem (11), insbesondere durch ein Einparkhilfe-System des Fahrzeugs (1) und/oder durch ein Abstandhalte-System des Fahrzeugs (1), genutzt wird, und/oder dass die Objekt-Erfassungseinrichtung zumindest teilweise durch ein separates System gebildet ist.

5. Verfahren nach einem der vorhergehenden Ansprüche, **dadurch gekennzeichnet, dass** die Objekt-Erfassungseinrichtung zumindest teilweise dem Fahrzeug (1) zugeordnet ist, und/oder dass die Objekt-Erfassungseinrichtung zumindest teilweise stationär und/oder ortsfest angeordnet ist.

6. Verfahren nach einem der vorhergehenden Ansprüche, **dadurch gekennzeichnet, dass** mittels der Objekt-Erfassungseinrichtung der definierte Nahbereich in einem definierten Zeitintervall auf sich in dem Nahbereich befindliche Objekte überprüft wird, wobei bevorzugt vorgesehen ist, dass das definierte Zeitintervall in Abhängigkeit von dem Abstand zwischen dem wenigstens einen Objekt und dem Fahrzeug (1) eingestellt und/oder verstellt wird.

7. Verfahren nach Anspruch 6, **dadurch gekennzeichnet, dass**, sofern mittels der Objekt-Erfassungseinrichtung kein Objekt in dem Nahbereich erfasst wird, der Nahbereich in einem ersten Zeitintervall, insbesondere in etwa alle 10 Sekunden, überprüft wird, und dass, sofern mittels der Objekt-Erfassungseinrichtung wenigstens ein Objekt in dem Nahbereich erfasst wird, der Nahbereich in einem kürzer als das erste Zeitintervall ausgebildeten zweiten Zeitintervall, insbesondere in etwa alle 0,5 Sekunden, überprüft wird.

8. Verfahren nach einem der vorhergehenden Ansprüche, **dadurch gekennzeichnet, dass** die Objekt-Erfassungseinrichtung eine Zeitdauer-Ermittlungseinrichtung (27) aufweist, mittels der eine Zeitdauer ermittelbar ist, in der sich das mittels der Objekt-Erfassungseinrichtung erfasste Objekt in dem definierten Nahbereich befindet, wobei bevorzugt vorgesehen ist, dass, sofern die ermittelte Zeitdauer einen definierten Zeitdauer-Wert, insbesondere in etwa 30 Sekunden, überschreitet, mittels der Signalausgabeeinrichtung selbsttätig das Warnsignal ausgegeben wird.

9. Verfahren nach Anspruch 8, **dadurch gekennzeichnet, dass** mittels der Objekt-Erfassungseinrichtung eine Position des Objekts relativ zu dem Fahrzeug (1) ermittelbar ist, dass mittels der Zeitdauer-Ermittlungseinrichtung (27) eine Positions-Zeitdauer ermittelbar ist, in der sich das mittels der Objekt-Erfassungseinrichtung erfasste Objekt in einer definierten Position relativ zu dem Fahrzeug (1) befindet, und dass, sofern die ermittelte Positions-Zeitdauer einen definierten Zeitdauer-Wert, insbesondere in etwa 10 Sekunden, überschreitet, mittels der Signalausgabeeinrichtung selbsttätig das Warnsignal ausgegeben wird.

10. Verfahren nach einem der vorhergehenden Ansprüche, **dadurch gekennzeichnet, dass** wenigstens eine Betätigungseinrichtung (37), insbesondere ein Taster und/oder ein Schalter, vorgesehen ist, mittels der die Objekt-Erfassungseinrichtung und/oder die wenigstens eine Signalausgabeeinrichtung deaktiviert und/oder aktiviert wird, und/oder dass eine Regel- und/oder Steuereinrichtung vorgesehen ist, mittels der die Objekt-Erfassungseinrichtung (3) beim Abstellen des Fahrzeugs (1) selbsttätig aktiviert und/oder beim Starten des Fahrzeugs (1) selbsttätig deaktiviert wird.

11. Verfahren nach einem der vorhergehenden Ansprüche, **dadurch gekennzeichnet, dass** mittels der Objekt-Erfassungseinrichtung (3) die Art und/oder die Größe des erfassten Objekts ermittelbar ist, wobei bevorzugt vorgesehen ist, dass das Warnsignal mittels der wenigstens einen Signalausgabeeinrichtung in Abhängigkeit von der Art des erfassten Objekts ausgegeben wird.

12. Verfahren nach einem der vorhergehenden Ansprüche, **dadurch gekennzeichnet, dass** die wenigstens eine Signalausgabeeinrichtung durch eine mobile Signalausgabeeinrichtung (19), insbesondere durch ein Smartphone und/oder durch einen Tablet-PC und/oder durch eine Smartwatch, gebildet ist, und/oder dass die wenigstens eine Signalausgabeeinrichtung durch eine stationäre Signalausgabeeinrichtung (21, 23), insbesondere durch einen stationären PC, gebildet ist, und/oder dass die wenigstens eine Signalausgabeeinrichtung durch eine fahrzeugseitige Signalausgabeeinrichtung (13, 15, 17) gebildet ist.

## Claims

1. Method for assisting a driver of a vehicle, wherein an object-sensing device (3) is provided, by means of which objects located outside the vehicle (1) in a defined vicinity in the region of the vehicle (1) can be detected and/or sensed automatically,
wherein in the shut-down state of the vehicle (1) the vicinity is monitored for objects located in the vicinity by means of the object-sensing device (3),
wherein objects which are spaced apart from the vehicle (1) can be detected and/or sensed by means of the object-sensing device (3),
wherein a distance between the at least one object, spaced apart from the vehicle (1), and the vehicle (1) can be determined by means of the object-sensing device (3),
wherein, if in the shut-down state of the vehicle (1) at least one object is sensed by means of the object-sensing device (3) and the determined distance is smaller than a defined signal distance value (33), at least one warning signal is output automatically by means of at least one signal-outputting device, **characterized**
**in that** the object-sensing device is arranged in the surroundings of the shut-down vehicle (1).

2. Method according to Claim 1, **characterized in that**, if the determined distance is smaller than the signal distance value and larger than an alarm distance value (35) which is made smaller than the signal distance value, in particular larger than approximately 0.01 metres, the warning signal is output automatically by means of some of the plurality of signal-outputting devices, and **in that**, if the determined distance is smaller than the alarm distance value (35), the warning signal is output automatically by means of all the signal-outputting devices.

3. Method according to Claim 1 or 2, **characterized in that** a distance between the at least one object, spaced apart from the vehicle (1), and the vehicle (1) can be determined by means of the object-sensing device (3), **in that**, if the determined distance is larger than a defined monitoring distance value (31), in particular larger than approximately 0.5 metres, the current distance from the object is determined with lower accuracy than for the case in which the determined distance is not larger than the defined monitoring distance value (31).

4. Method according to one of the preceding claims, **characterized in that** the object-sensing device is used at least partially by another vehicle system (11), in particular by a parking-aid system of the vehicle (1) and/or by a distance-maintaining system of the vehicle (1), and/or **in that** the object-sensing device is formed at least partially by a separate system.

5. Method according to one of the preceding claims, **characterized in that** the object-sensing device is assigned at least partially to the vehicle (1), and/or **in that** the object-sensing device is arranged at least partially in a stationary and/or positionally fixed fashion.

6. Method according to one of the preceding claims, **characterized in that** the defined vicinity is checked, in a defined time interval, for objects located in the vicinity by means of the object-sensing device, wherein there is preferably provision that the defined time interval is set and/or adjusted as a function of the distance between the at least one object and the vehicle (1).

7. Method according to Claim 6, **characterized in that**, if no object is sensed in the vicinity by means of the object-sensing device, the vicinity is checked in a first time interval, in particular approximately every ten seconds, and **in that**, if at least one object is sensed in the vicinity by means of the object-sensing device, the vicinity is checked in a second time interval which is made shorter than the first time interval, in particular

8. Method according to one of the preceding claims, **characterized in that** the object-sensing device has a time-period-determining device (27) by means of which a time period can be determined in which the object which is sensed by means of the object-sensing device is located in the defined vicinity, wherein there is preferably provision that if the determined time period exceeds a defined time period value, in particular approximately 30 seconds, the warning signal is output automatically by means of the signal-outputting device.

9. Method according to Claim 8, **characterized in that** a position of the object relative to the vehicle (1) can be determined by means of the object-sensing device, **in that** by means of the time-period-determining device (27) it is possible to determine a position time period in which the object which is sensed by means of the object-sensing device is located at a defined position relative to the vehicle (1), and **in that**, if the determined position time period exceeds a defined time period value, in particular approximately 10 seconds, the warning signal is output automatically by means of the signal-outputting device.

10. Method according to one of the preceding claims, **characterized in that** at least one activation device (37), in particular one pushbutton key and/or one switch, is provided, by means of which the object-sensing device and/or the at least one signal-outputting device is deactivated and/or activated, and/or **in that** a closed-loop and/or open-loop control device is provided by means of which the object-sensing device (3) is activated automatically when the vehicle (1) is shut down and/or is deactivated automatically when the vehicle (1) is started.

11. Method according to one of the preceding claims, **characterized in that** the type and/or the size of the sensed object can be determined by means of the object-sensing device (3), wherein there is preferably provision that the warning signal is output by means of the at least one signal-outputting device as a function of the type of the sensed object.

12. Method according to one of the preceding claims, **characterized in that** the at least one signal-outputting device is formed by a mobile signal-outputting device (19), in particular by a smartphone and/or by a tablet PC and/or by a smart watch, and/or **in that** the at least one signal-outputting device is formed by a stationary signal-outputting device (21, 23), in particular by a stationary PC, and/or **in that** the at least one signal-outputting device is formed by a signal-outputting device (13, 15, 17) on-board the vehicle.

## Revendications

1. Procédé pour assister un conducteur d'un véhicule, un dispositif de détection d'objet (3) étant présent, au moyen duquel des objets qui se trouvent en-dehors du véhicule (1) dans une zone de proximité définie dans la zone du véhicule (1) peuvent être reconnus et/ou détectés automatiquement,
dans l'état à l'arrêt du véhicule (1), la zone de proximité étant surveillée au moyen du dispositif de détection d'objet (3) en vue de la présence d'objets se trouvant dans la zone de proximité,
les objets espacés du véhicule (1) pouvant être reconnus et/ou détectés au moyen du dispositif de détection d'objet (3),
un écart entre l'au moins un objet espacé du véhicule (1) et le véhicule (1) pouvant être déterminé au moyen du dispositif de détection d'objet (3),
dans la mesure où, dans l'état à l'arrêt du véhicule (1), au moins un objet est détecté au moyen du dispositif de détection d'objet (3) et l'écart déterminé est inférieur à une valeur d'écart de signal (33) définie, au moins un signal d'alerte étant délivré automatiquement au moyen d'au moins un dispositif de délivrance de signal, **caractérisé en ce**
**que** le dispositif de détection d'objet est disposé dans l'environnement du véhicule (1) à l'arrêt.

2. Procédé selon la revendication 1, **caractérisé en ce que** dans la mesure où l'écart déterminé est inférieur à la valeur d'écart de signal et supérieur à une valeur d'écart d'alarme (35) fixée plus petite que la valeur d'écart de signal, notamment supérieur à environ 0,01 mètre, le signal d'alerte est délivré automatiquement au moyen d'une partie des plusieurs dispositifs de délivrance de signal, et **en ce que** dans la mesure où l'écart déterminé est inférieur à la valeur d'écart d'alarme (35), le signal d'alerte est délivré automatiquement au moyen de tous les dispositifs de délivrance de signal.

3. Procédé selon la revendication 1 ou 2, **caractérisé en ce qu'**un écart entre l'au moins un objet espacé du véhicule (1) et le véhicule (1) peut être déterminé au moyen du dispositif de détection d'objet (3), **en ce que** dans la mesure où l'écart déterminé est supérieur à une valeur d'écart de surveillance (31) définie, notamment supérieure à environ 0,5 mètre, l'écart actuel de l'objet est déterminé avec une précision plus faible que dans le cas où l'écart déterminé n'est pas supérieur à la valeur d'écart de surveillance définie (31).

4. Procédé selon l'une des revendications précédentes, **caractérisé en ce que** le dispositif de détection d'objet est utilisé au moins partiellement par un système de véhicule (11) supplémentaire, notamment par un système d'aide à l'entrée en stationnement du véhicule (1) et/ou par un système de maintien de distance du véhicule (1), et/ou **en ce que** le dispositif de détection d'objet est au moins partiellement formé par un système séparé.

5. Procédé selon l'une des revendications précédentes, **caractérisé en ce que** le dispositif de détection d'objet est au moins partiellement associé au véhicule (1), et/ou **en ce que** le dispositif de détection d'objet est au moins partiellement disposé de manière stationnaire et/ou en position fixe.

6. Procédé selon l'une des revendications précédentes, **caractérisé en ce que** la zone de proximité définie est contrôlée au moyen du dispositif de détection d'objet dans un intervalle de temps défini en vue de la présence d'objets qui se trouvent dans la zone de proximité, en prévoyant de préférence que l'intervalle de temps défini est réglé et/ou modifié en fonction de l'écart entre l'au moins un objet et le véhicule (1).

7. Procédé selon la revendication 6, **caractérisé en ce que** dans la mesure où aucun objet n'est détecté dans la zone de proximité au moyen du dispositif de détection d'objet, la zone de proximité est contrôlée dans un premier intervalle de temps, notamment environ toutes les 10 secondes, et **en ce que** dans la mesure où au moins un objet est détecté dans la zone de proximité au moyen du dispositif de détection d'objet, la zone de proximité est contrôlée dans un deuxième intervalle de temps fixé plus court que le premier intervalle de temps, notamment environ toutes les 0,5 seconde.

8. Procédé selon l'une des revendications précédentes, **caractérisé en ce que** le dispositif de détection d'objet possède un dispositif de détermination de durée (27) au moyen duquel peut être déterminée une durée dans laquelle l'objet détecté au moyen du dispositif de détection d'objet se trouve dans la zone de proximité définie, en prévoyant de préférence que dans la mesure où la durée déterminée dépasse une valeur de durée définie, notamment d'environ 30 secondes, le signal d'alerte est délivré automatiquement au moyen du dispositif de délivrance de signal.

9. Procédé selon la revendication 8, **caractérisé en ce qu'**une position de l'objet par rapport au véhicule (1) peut être déterminée au moyen du dispositif de détection d'objet, **en ce qu'**au moyen du dispositif de détermination de durée (27) peut être déterminée une durée de position pendant laquelle l'objet détecté au moyen du dispositif de détection d'objet se trouve dans une position définie par rapport au véhicule (1), et **en ce que** dans la mesure où la durée de position déterminée dépasse une valeur de durée définie, notamment d'environ 10 secondes, le signal d'alerte est délivré automatiquement au moyen du dispositif de délivrance de signal.

10. Procédé selon l'une des revendications précédentes, **caractérisé en ce qu'**au moins un dispositif d'actionnement (37), notamment une touche et/ou un commutateur, est prévu, au moyen duquel le dispositif de détection d'objet et/ou l'au moins un dispositif de délivrance de signal sont désactivés et/ou activés, et/ou **en ce qu'**un dispositif de régulation et/ou de commande est prévu, au moyen duquel le dispositif de détection d'objet (3) est activé automatiquement lors de l'arrêt du véhicule (1) et/ou désactivé automatiquement lors du démarrage du véhicule (1).

11. Procédé selon l'une des revendications précédentes, **caractérisé en ce que** la nature et la taille de l'objet détecté peuvent être déterminées au moyen du dispositif de détection d'objet (3), en prévoyant de préférence que le signal d'alerte est délivré par l'au moins un dispositif de délivrance de signal en fonction de la nature de l'objet détecté.

12. Procédé selon l'une des revendications précédentes, **caractérisé en ce que** l'au moins un dispositif de délivrance de signal est formé par un dispositif de délivrance de signal mobile (19), notamment par un Smartphone et/ou par une tablette PC et/ou par une montre connectée, et/ou **en ce que** l'au moins un dispositif de délivrance de signal est formé par un dispositif de délivrance de signal stationnaire (21, 23), notamment par un PC stationnaire, et/ou **en ce que** l'au moins un dispositif de délivrance de signal est formé par un dispositif de délivrance de signal côté véhicule (13, 15, 17).
